# EUROPEAN PATENT APPLICATION

(11) **EP 1 333 397 A2**
(43) Date of publication of application: **06.08.2003**
(21) Application number: 03001968.1
(22) Date of filing: 30.01.2003
(51) Int. Cl.: G06F 17/60

(54) **Industry specific plant model**

(30) Priority: 30.01.2002 DE 10203776; 23.08.2002 US 226443
(71) Applicant: SIEMENS AKTIENGESELLSCHAFT, 80333 München (DE)
(72) Inventor: Fromm-Ayass, Reinhard, 92348 Berg (DE); Orchard, Alastair, 16167 Genua-Nervi (IT); Uccelli, Maria, Giuseppina, 16145 Genua (IT)

(57) **Abstract**

An industry specific plant model is developed by describing a physical description of each physical and logical object in the industry specific plant model. The industry specific objects are selected from an industry suite library that describes a behavior of each industry specific object in a workflow. The industry suite library can be extended with new descriptions of physical and logical objects. The industry suite library contains additionally also the rules which describe the behavior and the interaction of the objects.

## Description

### BACKGROUND

### Priority.

The instant patent application is based on priority of

### Field of The Invention.

The present invention relates to a suite of automation processes and, more particularly, to an industry suite of automation processes that are characterized by the industry specific behavior, along with certain industry specific tools, into a library.

### Related Information.

The automation industry is becoming more focused on the customer. Indeed, automation processes are thought of today more as business flows, which inherently have the customer focus built in to the business model. This is in contrast to a production process, which is focused on the production. This has become possible, in part, due to the advancements in computer technology in the automation field. It has now become possible to control production processes from a top down approach, giving the business an overall view of the factory. With this capability, it has recently become possible to affect the processes according to the customer's needs, not vice versa.

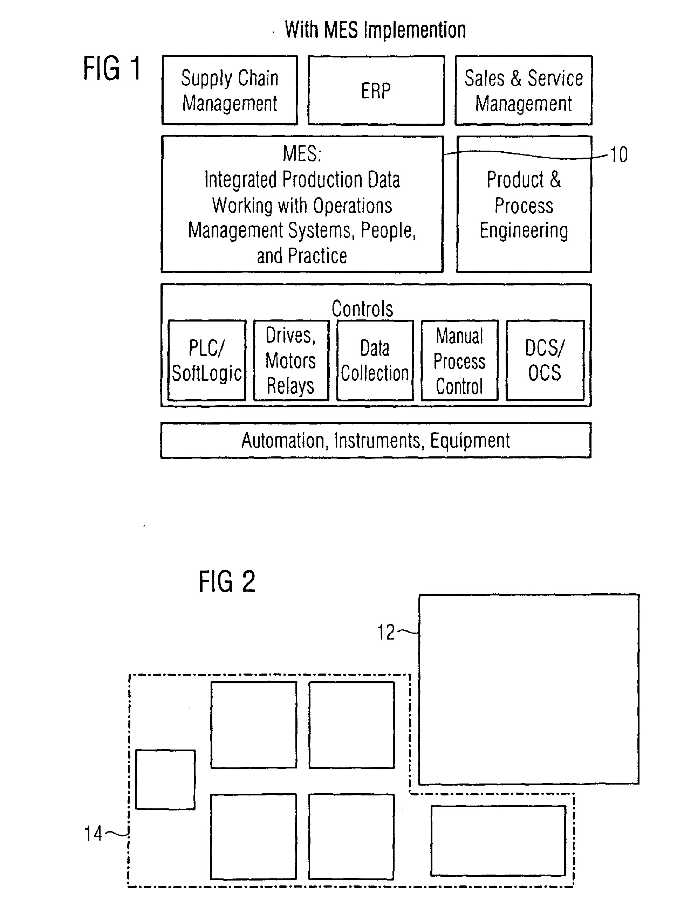

To that end, Manufacturing Execution Systems (MES) have been developed, an example of the model MES standard provided by the Manufacturing Execution Systems Association MESA is shown in Figure 1. As shown, the model describes a system 10, which, rather than focusing on measurements of material usage or process control, centers on the product itself as it moves through the plant on the way to the customer. MES delivers information that enables the optimization of production activities from order launch to finished goods. Using current and accurate data, MES guides, initiates, responds to, and reports on plant activities as they occur. The resulting rapid response to changing conditions, coupled with a focus on reducing non value-added activities, drives effective plant operations and processes.

As a result of such MES, the business is able to focus more on overall business objectives. This includes improving the return on operational assets as well as on-time delivery, inventory turns, gross margin, and cash flow performance. In addition, MES provides mission-critical information about production activities across the enterprise and supply chain via bi-directional communications.

For all its advantages, MES still does not provide sufficient freedom to the business to allow it to focus completely on the customer. To explain, MES requires an intensive amount of start up integration which is daunting to businesses who desire to implement these systems. In particular, it is a problem that a specific business must often custom tailor the MES applications for a specific industry, as each industry has different processes, as well as market factors, such as supply chain issues, materials availability, and customer needs, for example.

What is needed is a solution that provides a customer with a prepackaged set up that is specific as to the customer behavior of the particular industry. What is needed is a concrete production control application. Archiving, that is, saving files in a library for reuse, while useful, is not the solution because archiving cannot be shaped for different industries.

Heretofore, there has been no up front user environment that includes prepackaged object descriptions, rules and behavior that are common in the target Industry.

### SUMMARY & OBJECTS OF THE INVENTION

It is, therefore, an object of the present invention to provide a suite of automation processes.

It is another object of the present invention to provide an industry suite of automation processes that are characterized by the industry specific behavior

It is another object of the present invention to provide an industry suite of industry specific tools.

It is another object of the present invention to provide an industry suite of automation processes that are stored in a library.

It is another object of the present invention to provide a customer with a prepackaged set up that is specific as to the customer behavior of the particular industry.

In accordance with the foregoing objectives, there is provided an industry specific plant model developed by describing a physical description of each physical and logical object in the industry specific plant model. The industry specific objects are selected from an industry suite library that describes a behavior of each industry specific object in a workflow.

### BRIEF DESCRIPTION OF THE DRAWINGS

Fig. 1 illustrates the MESA model;
Fig. 2 illustrates the components of an assembly plant of the present invention;
Fig. 3 illustrates a factory layout for discrete manufacturing of the present invention;
Fig. 4 illustrates a warehouse of the present invention;
Fig. 5 illustrates a workshop area of the present invention;
Fig. 6 illustrates an assembly area of the present invention;
Fig. 7 illustrates an assembly line of the present invention;
Fig. 8 illustrates a first event of the present invention;
Fig. 9 illustrates a second event of the present invention;
Fig. 10 illustrates a third event of the present invention;
Fig. 11 illustrates a fourth event of the present invention;
Fig. 12 illustrates a fifth event of the present invention;
Figs. 13a-c illustrate the Framework of the present invention.

### DETAILED DESCRIPTION OF THE PREFERRED EMBODIMENTS

The present invention provides an Industry Suite that offers a customer functionality packaged as a product in a prepackaged form. The functionality is connected to rules definitions and formats that describe in a predefined manner the behavior interaction of the modules according to an industry target. As each industry has specific behavior, the Industry Suite provides a means for providing specific rules suited to the special industry. The core invention develops and stores the industry specific behavior as a configuration, along with certain industry specific tools, into a library. Thus, the stored objects can be instantiated - and further shaped for different industries.

From the outset, it shall be appreciated that the present invention provides a solution. That is, there is provided a concrete production control application at the production level. This is in contrast to machine control at the machinery level which is one level below. Thus, the present invention fits within the MES schema and, within certain aspects of the invention, to be later described, the present invention works with MES to provide customer driven solutions for production control focused on the customer's needs.

The first step in the invention is to expose the material tracking product. That is, the invention exposes functions and events of the material tracking product. In one aspect of the invention, exposing the functions and events is achieved by writing the objects into a COM interface. In order to do this, however, the foundation of the invention must first be set forth.

The invention builds an industry specific plant model 12, as shown in Figure 2. In brief, this is accomplished, first, by describing a physical description of each object in the plant. As an example, and as shown in the Figure, there is provided various objects 14 of a discrete manufacturing plant 12, such as automotive parts, compressors, burners, motors, electrical equipment, etc. These objects, which are specific to the industry (the discrete manufacturing plant shown) are organized and stored, according to specific industry, in the Industry Suite and are selectable by the user. The behavior of each object is described in the workflow or production. Such behavior may include event caller, such as maintenance management systems.

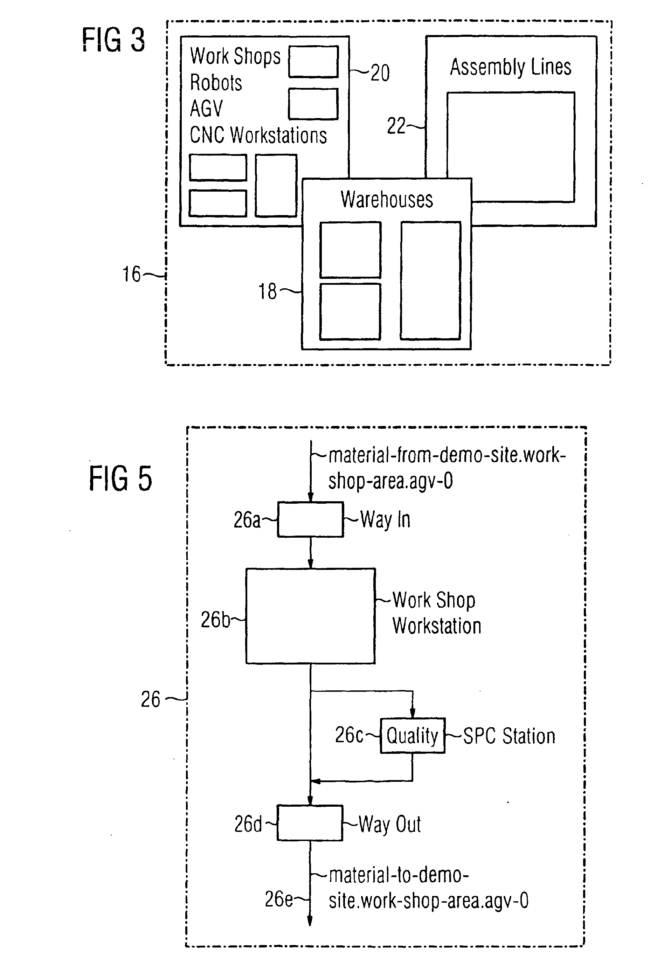

As shown in Figure 3, the present invention provides a graphical layout 16 of the discrete manufacturing plant from a workflow perspective, including a warehouse 18, a workshop 20 and an assembly line 22. This provides the user with the capability of selecting amongst the logical divisions of a plant in a top down approach.

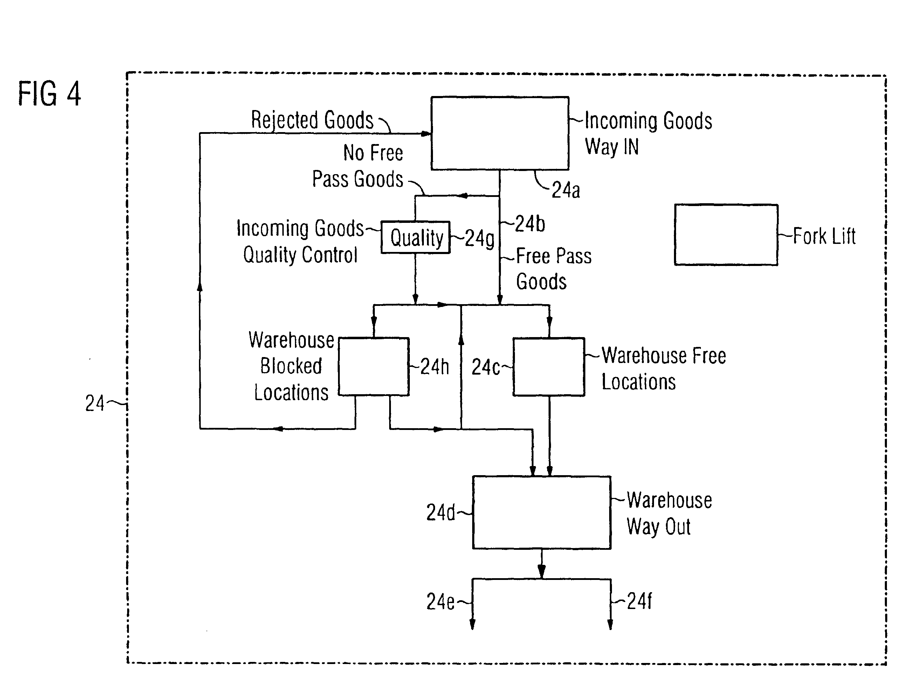

When the user selects the warehouse 18, for example, there is provided automatically a graphical illustration 24 of the warehouse control process 24 as shown in Figure 4. In the present invention, the layout of the warehouse is industry specific. Not only are there specific objects selects, such as a forklift, etc., the actual layout is pre-arranged according to the specific behavior of the industry. Selecting on any of the icons will automatically access the object

There is illustrated in Figure 4 the industry specific layout for a discrete manufacturing plant warehouse. As shown in the figure, there is illustrated by the graphical illustration, icons that represent the physical objects of the plant. In one aspect of the invention, there is provided actual video of the representative object. In the figure, there is an incoming goods icon 24a where the discrete manufacturing components come into the warehouse. Normally, in the discrete manufacturing goods sector, there is a quality review process, particularly when the business model relies heavily on vendors, for example. In this specific behavior in our example, some components are automatically passed through a free pass goods 24b area, such as goods which normally have a good quality or goods that do not require quality review. After which, the goods are transferred to a warehouse location 24c. Upon need for the component, or good, the good is transported to the way out area 24d and eventually to the shop area, demo site, etc. 24e, or any number of other sites 24f.

In the discrete manufacturing industry there is behaviorally a quality review check. Thus, there is provided an incoming goods quality control area 24g where the goods are inspected for quality. When the good does not pass the quality review, the defective good or component is sent to the warehouse blocked location 24h. When the component is returned, the failed component is forwarded to the warehouse way out area 24d and eventually to the returned site 24e, 24f.

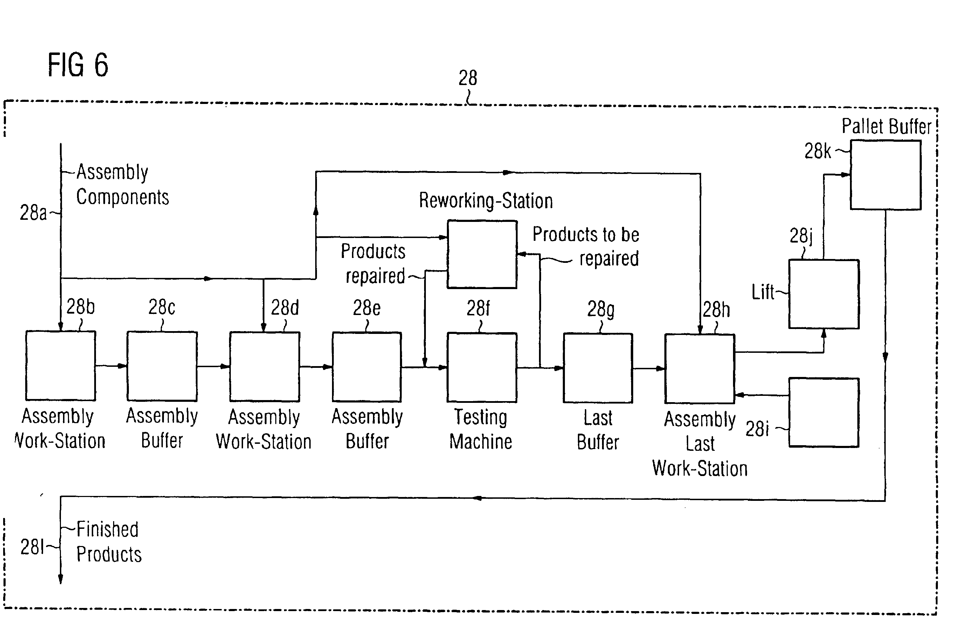

Now, the workshop 20 will be described with reference to Figure 5. When the user selects on the workshop 20 in Figure 3, the invention automatically displays a graphical representation of the workshop area 26. Similar to the warehouse layout provided by the present invention, the workshop area layout and selected objects will depend on the specific industry. Here, the discrete manufacturing industry in our example includes a way in area 26a where the workpiece is first brought to the workshop area. Then, the workpiece is directed to the appropriate work shop station 26b where the workpiece will be worked on. After successful completion of the work on the workpiece, the workpiece is transferred to the way out area 26c and eventually to the destination site 24d, such as returned to the warehouse 18, etc. The decision of whether the workpiece is successfully repaired is made at the quality station 26e, which may be an SPC station, for example.

As previously explained, the present invention provides layout and selected objects based on the specific industry behavior. This may be better appreciated with respect to Figure 6, which illustrates the assembly area layout 28 of a discrete manufacturing industry. In discrete manufacturing, the components are assembled at the assembly components area 28a and the assembly workstation 28b. When discrete components overload the assembly components area 28b, the assembly buffer 28c absorbs the overflow of the discrete manufacturing assembly process. The process continues at another assembly workstation 28d, for example, when other components require other assembly processes. Another assembly buffer 28e is provided as the overflow area for the assembly workstation 28d. The assembled product, then, proceeds to the testing machine 28f where it is tested. Assembled products that overflow the testing machine 28f are stored in the last buffer area 28g. The assembled product undergoes n number of assemblies until it is completed in the last assembly workstation 28h. At this time, the final assembled product is branded with a serial number, for example, by serial number generator 28i. The discrete manufacturing system here provided may include, in this example, a lift 28j for transporting the assembled product to a pallet buffer area 28k. The pallet area buffer 28k, for example, is an area where the assembled products are stored until they are put on a pallet and later transported by, for example, a forklift. The assembled products are then transferred to the finished products area 281.

In the discrete manufacturing process, there is often a need for reworking the assembled product. It may occur, for example, that the workpiece is in disrepair. Therefore, for example, there is provided a reworking station 28m to repair the workpiece.

It will be appreciated from the foregoing figures that, on lowest level, there are functions which are independent, that is, they are cross industry. These objects, in the present invention, may be employed in more than one industry. However, the present invention additionally provides selected, or specialized objects, for specific industries. These specific objects are prepackaged along with the independent objects and stored in the Industry Suite library.

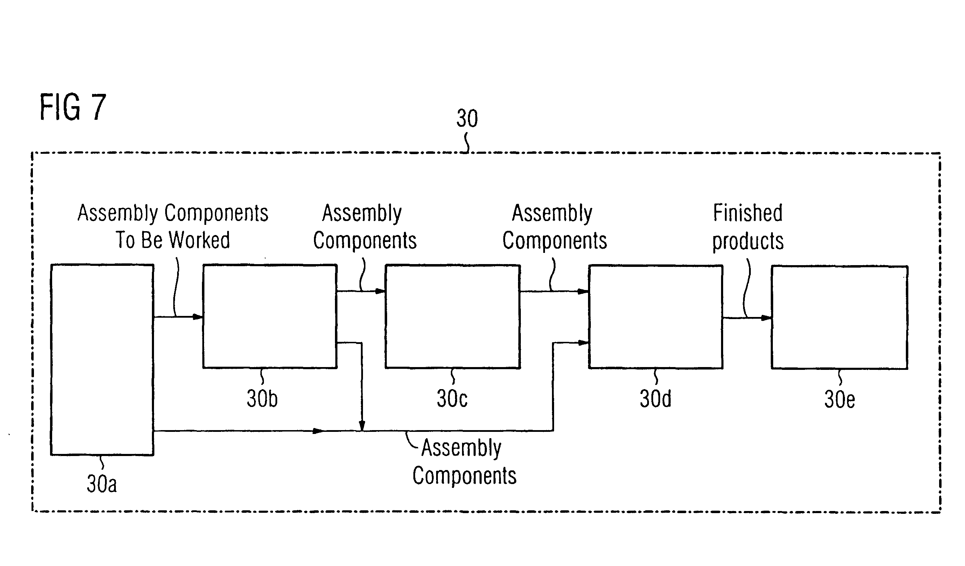

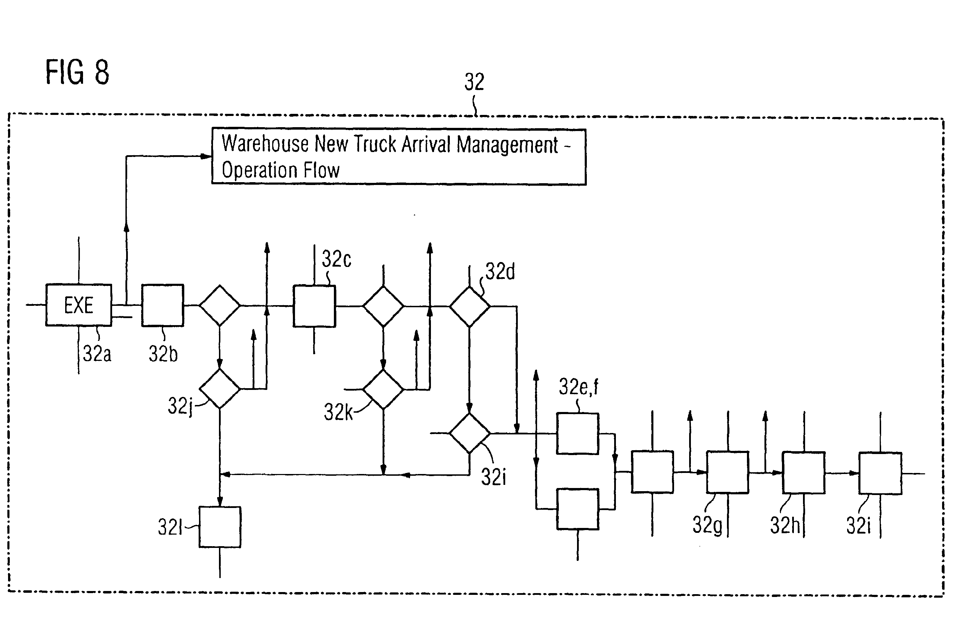

Now, the present invention shall be demonstrated with reference to Figs. 7-13 which illustrate events, i.e., specialized functions that are pre-packaged for a particular industry, in our example, the discrete manufacturing industry. Fig. 7 illustrates the assembly line in which the events shown in Figs. 8-13 are executed. In the figure, there is shown an area 30a where assembly components are to be worked. The assembly components then go through several 30 b-d assembly areas and sent to the finished product area 30e. Within the assembly process, the user executes any of the following events.

Fig. 8 illustrates a new truck arrival management operation flow according to the present invention. In step 32a, the truck is received and in step 32b is accepted to the warehouse. Next, the truck is transported and the material that is carried by the truck is identified in step 32c. A quantity check 32d and a quality check is performed in 32i. In step 32e, f lot generation of the material is performed. Then, in step 32 g, the location of the material where it is to be stored is determined. In step 32h, the material is unloaded and the truck is discharged. In step 32i, the material is stored. In the case that the truck is rejected, as tested in step 32j, the truck is rejected in step 32I.

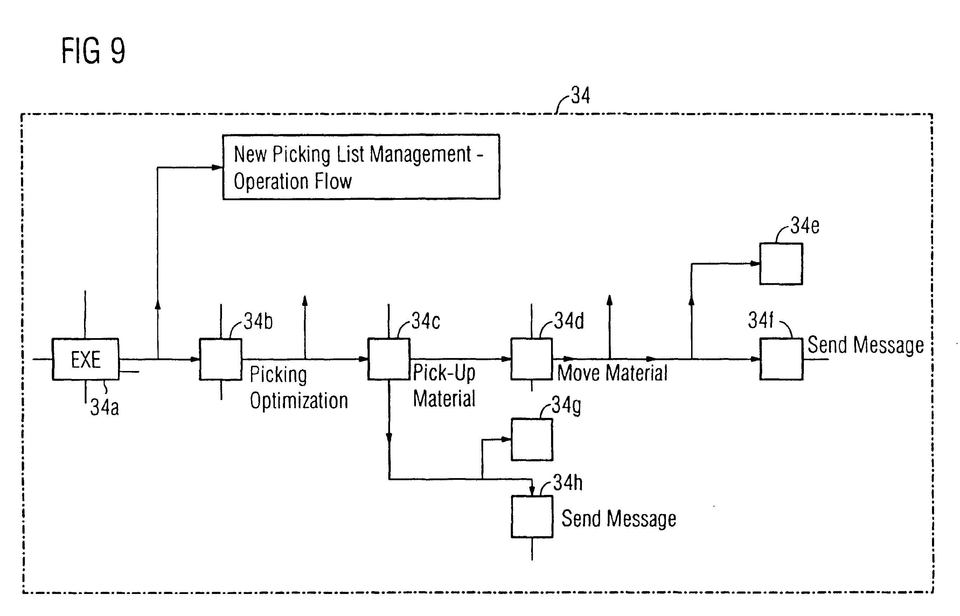

In discrete manufacturing assembly, there is specifically needed the ability to prepare pick up lists, that indicate the list of materials that are ready to be picked up. Fig. 9 illustrates a new picking list management operation flow 34g according to the present invention. As shown, there is first the execution step 34a. Then, in step 34b, there is the picking optimization step that optimizes picking. In 34c, there is provided the pick up material step for picking up the material. The material is then moved in step 34d and made ready for transport in step 34e. In this example, a message is then sent in step 34f indicating that the material is ready to be transported. In the case that there is a delay in picking up the material, step 34g registers this situation and sends a message in step 34h. In discrete manufacturing assembly, there is specifically needed the ability to prepare pick up lists, that indicate the list of materials that are ready to be picked up. The present invention, thus, provides a specialized function for this specific industry behavior.

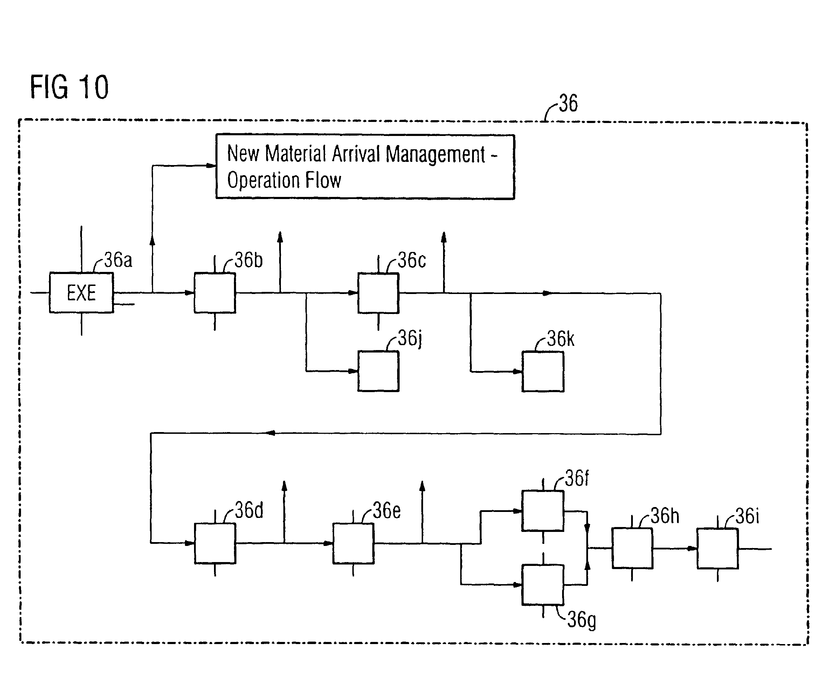

In discrete manufacturing assembly, there is specifically needed the ability to prepare for new material arrival. Fig. 10 illustrates a new material arrival management operation flow according to the present invention. The process is executed in step 36a and the material ID is detected in step 36b. In step 36c, a destination definition, based on the ID, is prepared. The optimal path to the destination is determined in step 36d and the AGV is activated in step 36e. In steps 36f and 36g, the material is moved using different equipment. The material is received in step 36h and sent to the appropriate area in step 36i. In the case that there is no ID, an ID is set for the received material in step 36j. In the case that a destination for the received material is not determined from the ID, a special destination is determined in step 36k. In discrete manufacturing assembly, there is specifically needed the ability to prepare for the arrival of new material and this is provided by the foregoing operation flow. The present invention, thus, provides a specialized function for this specific industry behavior.

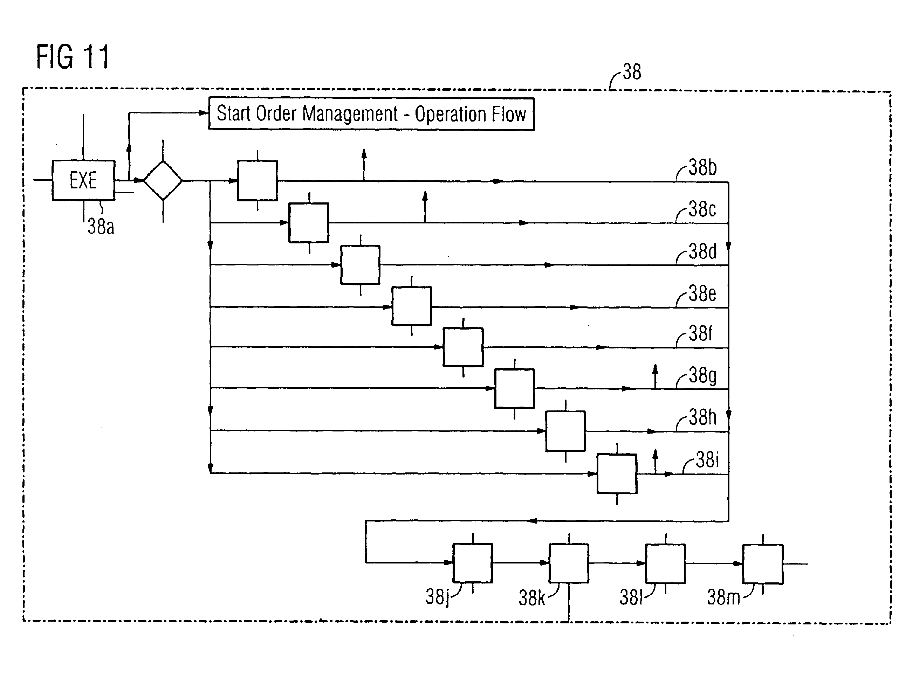

In discrete manufacturing assembly, there is specifically needed the ability to start an order for a specific assembly process. Fig. 11 illustrates a start order management operation flow according to the present invention. The process is executed in step 38a and the type of process is determined step 38b. In step 38c, the material lot is read. In step 38d, the labor instruction indicating the type of labor to be executed on the material is read. The machine set up for the specific instruction is downloaded in step 38e. A quality instruction for the order is shown in step 38f and the quality set up is downloaded in step 38g. Next, the machine status is changed in step 38h and the set up is evaluated in step 38i. The production is started in steps 38j and k. The order is completed in step 381. Upon completion, the machine status is changed in step 38m. In discrete manufacturing assembly, there is specifically needed the ability to start an order as provided above. The present invention, thus, provides a specialized function for this specific industry behavior.

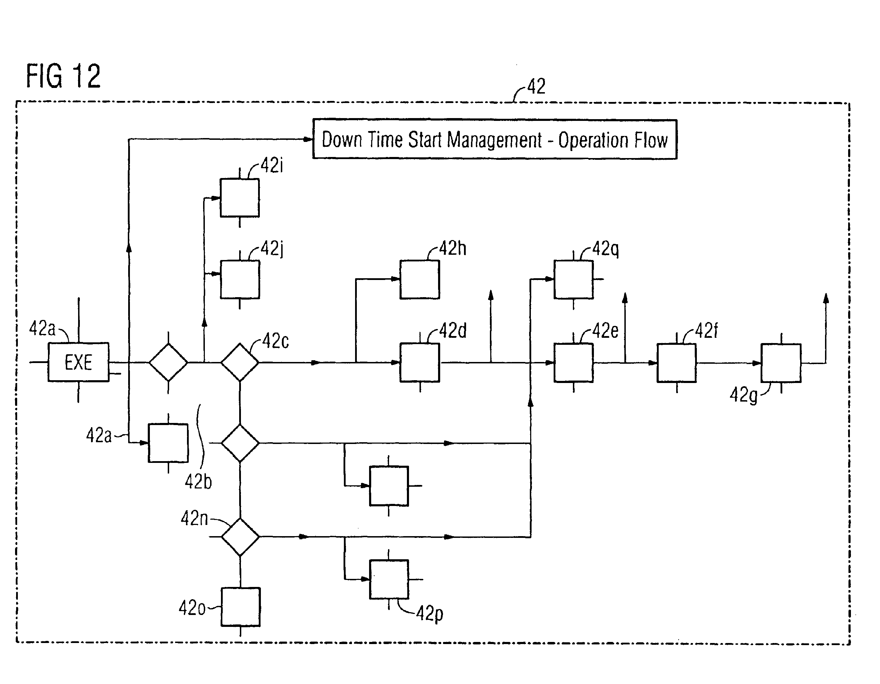

In discrete manufacturing assembly, there is specifically needed a new production plan arrival to prepare the arrival of a new production plan. Fig. 12 illustrates a new production plan management operation flow according to the present invention. The new production plan arrival process is executed in step 40a. Based on the new production plan, scheduling operations are rescheduled in step 40b. With the new plan, new orders are ready to be downloaded in step 40c. In discrete manufacturing assembly, there is specifically needed the ability to prepare for the arrival of a new production plan. The present invention, thus, provides a specialized function for this specific industry behavior.

In discrete manufacturing assembly, there is specifically needed a down time management process. Fig. 12 illustrates a down time start management operation flow according to the present invention. The process is executed in step 42a and the system immediately interrupts the process to call a maintenance request in step 42 b and indicates a maintenance failure in step 42c. In step 42d, the failure is evaluated and a repair schedule is prepared in step 42e. In step 42q, the maintenance is carried out. Since the order is no longer valid, the order list is deleted in step 42f and an updated order is retrieved in step 42g. In the case that the process must go off line, orders and production are suspended in steps 42i and j. The system is restarted in step 42h. In step 42k, a failure report is printed. In the particular process show, an organizational problem is checked in step 42 I and indicated in step 42m. If the problem is lack of material, this is indicated in step 42n and reported in step 42p. If all else fails and no failure can be determined, the downtime is unrecognized in step 42o.

Thus, the present invention provides a top down approach that starts with a general description of functionality and then provides more detailed steps as needed until a behavior for a specific industry is obtained. It shall be appreciated that there may be related industries. In the bottling industry, for example, there is from the controls point of view similar contexts for bottling whether it is beer or milk, for example. All the user need do at this point is to choose the application environment up front and package rules and behavior that are common in this industry. Of course, there will always be some level of programming integration. However, the present invention provides a best fit for a particular industry based on the behavior of the particular industry has the tools he/she needs to implement to other industries.

For example, Industry Suite covers functionality of brewing applications that is defined and described in libraries. The user defines in another brewery, that is, instantiates the objects, and adds the customer specific part, which has to be programmed, possibly modified and extended. Thus, with the present invention the user can describe the new plant or implement new library elements, offering reusability of applications. The user can reuse the food and beverage Industry Suite functions, for example, in different instantiations and, then again, use these instantiations in another plant. Customer specific part can programmed by the system integrator and not by the customer. In the United States, ATCs provide these services.

The present invention further provides a graphical engineering environment, which allows the user to define and describe the plant, as well as a model of the production environment. In one aspect, the interface is on different levels. The lowest level interface plugs into modules and connects them together as a COM interface. A more sophisticated interface may be provided by the underlying technology, which uses Framework technology of XML.

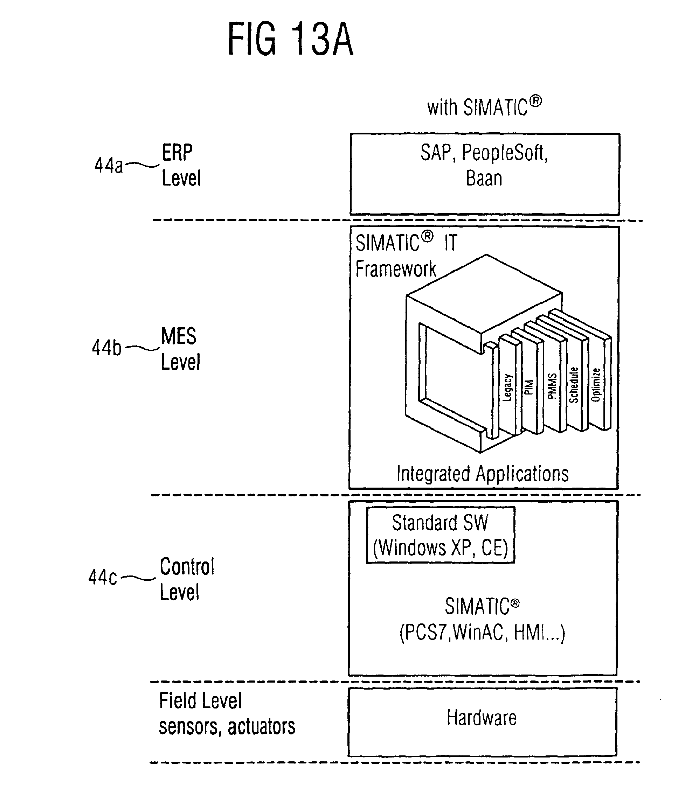

The Framework which supports the interface of the present invention is illustrated in Fig. 13a. There is provided integration and coordination of the components, which make up a manufacturing execution system (MES). The Industrial Framework implements and manages not only data communications between different functional components but also allows the user to model the way in which these components work together to achieve manufacturing goals. In this environment, there is supported the Industry Suite of the present invention.

Before engaging in a discussion of the Industrial Framework, it shall be appreciated that, while the present invention is described in terms of an Industrial Framework, the invention encompasses and is applicable to other types of Frameworks. A Framework is a software system, or sub-system that is intended to be instantiated. The instantiation of a framework involves composing and sub-classing the existing classes. A Framework for applications in a specific domain is called an application framework. It defines the architecture for a family of systems or sub-systems and provides the basic building blocks to create them and the places where adaptations for specific functionality should be made. In an object-oriented environment a framework consists of abstract and concrete classes. It includes an ERP level 44a, MES level 44b and a control level 44c. The Industrial Framework in the context of the present invention is but one type of Framework and may include other Frameworks, such as Telecommunications, ERP, Billing, etc.

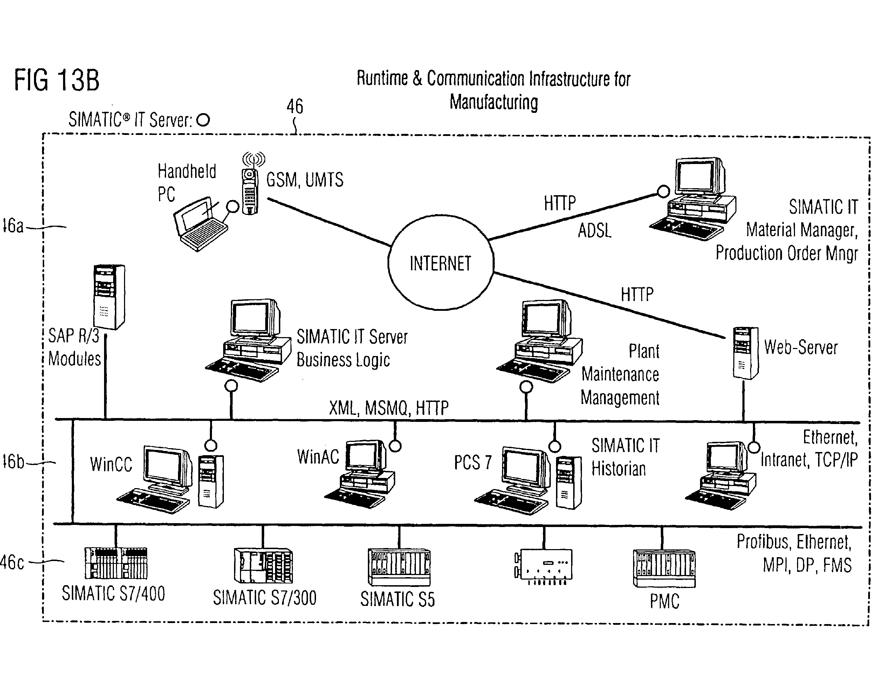

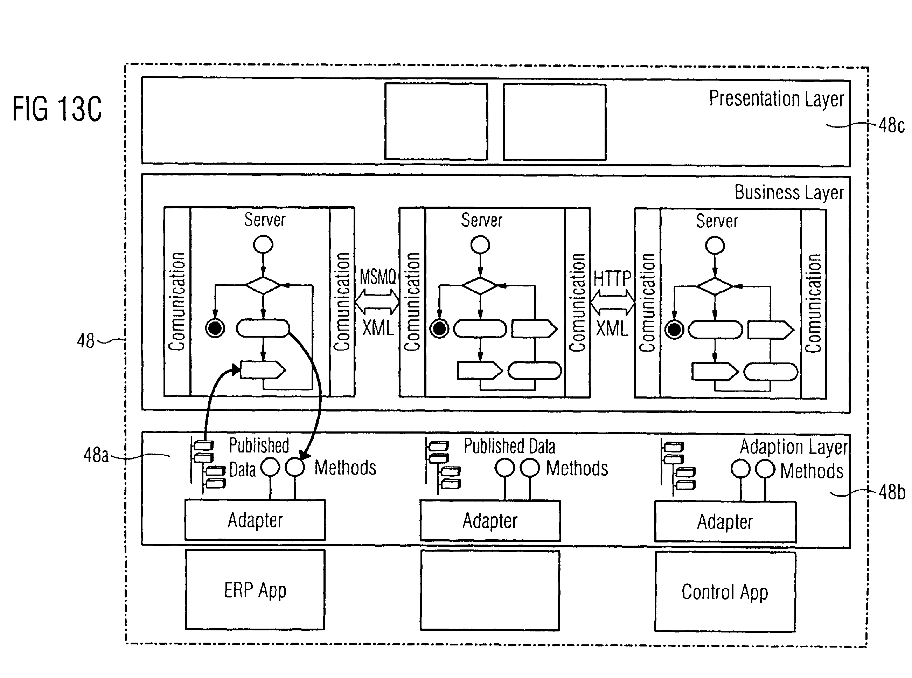

As will be appreciated from Figure 13b, the Industrial Framework of the present invention provides a flexible architecture 46 which is scalable, distributed and open, providing a true n-level architecture. It includes a server layer 46a, a host layer 46b and a control layer 46c. It will also be seen from the Figures that the Framework has multiple data transports including HTTP and MS Message Queuing, which could support remote access and control, such as through the Internet or through GSM, UMTS, for example. From the Figures, it is shown that the Framework supports both synchronous and asynchronous communication, thereby equipped to integrate any system.

As illustrated, HMI or GUI devices are supported, lending declarative and graphical methods of modeling and making possible the execution of company-wide information flows. From the architecture it will be observed that the invention is inherently expandable, dynamically configurable and offers reusable solutions. As a complete integration method, the invention provides communication protocols that include Request & Response, Publish & Subscribe, or OPC-Style data access. In addition, the invention does not lose any of the advantages offered by the operating system architectures of old, by providing object-oriented integration architecture based on a generic object model.

The Architecture 48 of figure 13c illustrates how the published data and/or method(s) are both accessible and extendible by other applications through the Framework. As shown, and in one aspect of the invention, the adapter 48a publishes the data 48a and methods 48b in an extensible format, such as XML that can be easily transported via MSMQ or HTTP, and other known and future communication means. The code making up the data and/or methods is modified by another application, or user of the other application, connected to the Framework using, for example, a GUI in the presentation layer 48c, heretofore described. The objects so extended are then stored in a library and, therefore, are reusable.

## Claims

1. A method for building an industry specific plant model, comprising the steps of:
describing a physical description of each physical and each logical object in the industry specific plant model by selecting industry specific objects from an industry suite library; and
describing a behavior of each industry specific and its interaction with other objects described in a workflow.

2. The method of claim 1, further comprising the step expressing a relationship between the industry specific objects as a layout of industry specific plant model.

3. The method of claim 1, further comprising the step of arranging the selected industry specific objects in a layout according to the behavior of the specific industry.

4. The method of claim 1, further comprising the step of extending the functionality of an industry suite library by adding new physical and logical objects as well as new rules.

5. The method of claim 1, further comprising the step of extending the functionality of an industry specific object in the industry suite library to accommodate a related industry specific object.

6. The method of claim 4, wherein the step of extending functionality stores in a know how library for the specific industry.

7. The method of claim 4, wherein the step of reusing the extended industry specific objects.

8. The method of claim 1, further comprising the step of capturing pictures of the plant floor associated with the specific industry objects.

9. The method of claim 1, further comprising the step of providing an interface for interfacing a user to the industry suite.

10. The method of claim 8, further comprising the step of exposing errors in the system using the interface.

11. A computer readable product encoded with computer readable instructions that drive a computer to execute the steps in accordance with claim 1.

12. An industry suite, comprising:
a predefined set of components independent from the industry branch;
a set of components that are dedicated to a specific industry; and
a library comprising the components having a specific customer behavior.

13. The apparatus of claim 12, wherein the object is an event caller.

14. The apparatus of claim 12, wherein the object is a maintenance management system.

15. The apparatus of claim 12, wherein a relationship between the industry specific objects is expressed as a layout of the industry specific plant model.

16. The apparatus of claim 12, further comprising a layout of prearranged industry specific objects that are arranged according to the behavior of the specific industry.

17. The apparatus of claim 12, further comprising a graphical user interface for extending the functionality of an industry specific object in the industry suite library to accommodate a related industry specific object.

18. The apparatus of claim 17, wherein the extended industry specific objects are stored in a know how library that stores objects for the specific industry.

19. The apparatus of claim 17, wherein the extended industry specific objects are reusable.

20. The apparatus of claim 12, further comprising a system that has an interface to see where errors are in system.
